Europäisches Patentamt

European Patent Office

Office européen des brevets

(11) Veröffentlichungsnummer: **0 259 247**
**A1**

## (12) EUROPÄISCHE PATENTANMELDUNG

(21) Anmeldenummer: 87730090.5

(22) Anmeldetag: 05.08.87

(51) Int. Cl.⁴: **H 04 M 19/08**

(30) Priorität: 26.08.86 DE 3628996

(43) Veröffentlichungstag der Anmeldung:
09.03.88 Patentblatt 88/10

(84) Benannte Vertragsstaaten:
AT BE CH DE ES FR GB GR IT LI LU NL SE

(71) Anmelder: KRONE Aktiengesellschaft
Beeskowdamm 3-11
D-1000 Berlin 37 (DE)

(72) Erfinder: Barndt, Manfred
Jahnstrasse 75
D-1000 Berlin 47 (DE)

Tornow, Ralf-Dieter
Himbeerstrasse Nr. 49
D-1000 Berlin 37 (DE)

(54) Schaltungsanordnung für einen Fernsprechapparat.

(57) Es soll eine Schaltungsanordnung geschaffen werden, die die von der Amtsschleife angebotene Energie weitgehend für zusätzliche Leistungsmerkmale zur Verfügung stellt. Hierzu ist eine Schaltungsanordnung mit einer Sprechschaltung und einem Wählorgan für einen schleifengespeisten Fernsprechapparat vorgesehen, bei der die Sprechschaltung (11) und das Wählorgan (10) in Serie geschaltet sind und bei der die Sprechschaltung (11) gleichstrommäßig niederohmig und das Wählorgan (10) wechselstrommäßig niederohmig ausgebildet sind.

FIG.1

**Beschreibung**

Schaltungsanordnung für einen Fernsprechapparat

Die Erfindung bezieht sich auf eine Schaltungsanordnung für einen Fernsprechapparat gemäß dem Oberbegriff des Anspruches 1.

Im modernen Fernsprechapparat besteht der Wunsch nach zusätzlichen Leistungsmerkmalen, wie z.B. Lauthören, Freisprechen und Hinweiseinrichtungen. Zur Speisung dieser Einrichtungen ist Gleichenergie notwendig, die nicht im unbegrenzten Maße zur Verfügung steht, da die gesamt benötigte Energie nur aus der Amtsschleife entnommen werden kann.

Bei den bisherigen Schaltungsanordnungen ist das Wählorgan parallel zur Sprechschaltung geschaltet. Dies hat aber den Nachteil, daß wenig gleichenergie (Gleichspannung, Gleichstrom) für das Wählorgan zur Verfügung steht, da der Hauptteil des Schleifenstromes durch die Sprechschaltung fließt. Werden zusätzliche Leistungsmerkmale gewünscht, so besteht die Notwendigkeit, mehr Gleichenergie am Wählorgan zur Verfügung zu stellen. Folgende Möglichkeiten sind hierzu bei einer Parallelschaltung von Sprechschaltung und Wählorgan zur Realisierung vorhanden:

1. Zur Gleichenenergieabzweigung wird ein zusätzlicher paralleler Weg zum Wählorgan bzw. zu einer hochohmigen Sprechschaltung geschaltet. Das Mikrofon darf hierbei nur wenig Strom verbrauchen.

2. Durch einen Eingriff in die Sprechschaltung, wird die Gleichenergie durch die Serienspeisung im Mikrofonpfad gewonnen.

Beide Möglichkeiten sind mit den derzeit vorhandenen Bauelementen nur unzureichend und aufwendig zu realisieren.

Der Erfindung liegt von daher die Aufgabe zugrunde, eine einfache Schaltungsanordnung zu schaffen, die die von der Amtsschleife angebotene Energie (Spanning, Strom) weitgehend für zusätzliche Leistungsmerkmale zur Verfügung stellt, d.h. die Sprechschaltung soll wenig Gleichenergie verbrauchen.

Die Lösung dieser Aufgabe ergibt sich aus den kennzeichnenden Merkmalen des Anspruches 1. Erfindungsgemäß sind die Sprechschaltung und das Wählorgan der Schaltungsanordnung in Serie geschaltet, wobei die Sprechschaltung gleichstrommäßig niederohmig und das Wählorgan wechselstrommäßig niederohmig ausgebildet sind.

Dies hat den Vorteil, daß in der Wählschaltung die Gleichenergie genutzt werden kann, die in herkömmlichen Sprechschaltungen ungenutzt vernichtet wird.

In einem Ersatzschaltbild ist die prinzipielle Wirkungsweise dargestellt. Darin ist im Wählorgan ein nsa-Kontakt angeordnet, der den Schleifenstrom im Sprechbetieb über eine erste Z-Diode und im Wählbetrieb über eine zweite Z-Diode führt, die die jeweiligen geforderten Widerstandswerte für den Sprech- und Wählbetrieb erfüllen.

Zur Realisierung dieser Z-Dioden ist eine Steuerschaltung vorgesehen, die zur Speisung von zusätzlichen Leistungsmerkmalen im wesentlichen aus einem Spannungsregler, einem Spannungsvervielfacher, einer Auswerteschaltung, einem Stützkondensator, einer Schleifenerkennung und aus zwei regelbaren Widerständen besteht.

Der Spannungsregler ist erfindungsgemäß derart dimensioniert, daß die Ausgangsspannung ($U_{OUT}$) (im allgemeinen 5 V) immer die zu betreibende Schaltung versorgt. Ist die Eingangsspannung ($U_{IN}$) des Spannungsreglers wesentlich größer als die benötigte Ausgangsspannung ($U_{OUT}$), so wird der überschüssige Strom über einen Shuntweg abgeleitet, wodurch eine Schleifenerkennung zustandekommt. Bei einer positiven Stromdifferenz zwischen Eingangsstrom und Ausgangsstrom wird erfindungsgemäß ein Stützkondensator über einen weiteren Strompfad geladen. Muß die Eingangsspannung im Wählbetrieb kleiner als die gewünschte Ausgangsspannung sein, so wird erfindungsgemäß ein Spannungsvervielfacher über den nsa-Kontakt aktiviert. Der Spannungsvervielfacher verdoppelt die Eingangsspannung, so daß letztendlich in jedem Fall eine positive Differenzspannung am Spannungsregler anliegt, die, wie bereits oben erwähnt, über den Shuntweg und den Strompfad begrenzt wird.

Die Erfindung ist nachfolgend anhand eines in den Zeichnungen dargestellten Ausführungsbeispieles näher erläutert. Es zeigt:

Fig. 1 die Fernsprechapparateschaltung mit der seriellen Anordnung der Sprechschaltung und dem Wählorgan als Blockschaltbild,

Fig. 2 das Wählorgan nach Fig. 1 in einem Ersatzschaltbild mit zwei Z-Dioden,

Fig. 3 die Steuerschaltung in der konkreten Ausführung der beiden Z-Dioden nach Fig. 2,

Fig. 4 die Realisierung der Schaltungsteile nach Fig. 3 und

Fig. 5 ein Spannungs-/Zeit-Diagramm mit den Potentialverläufen an den Anschlußpunkten der Sprechschaltung und des Wählorgans.

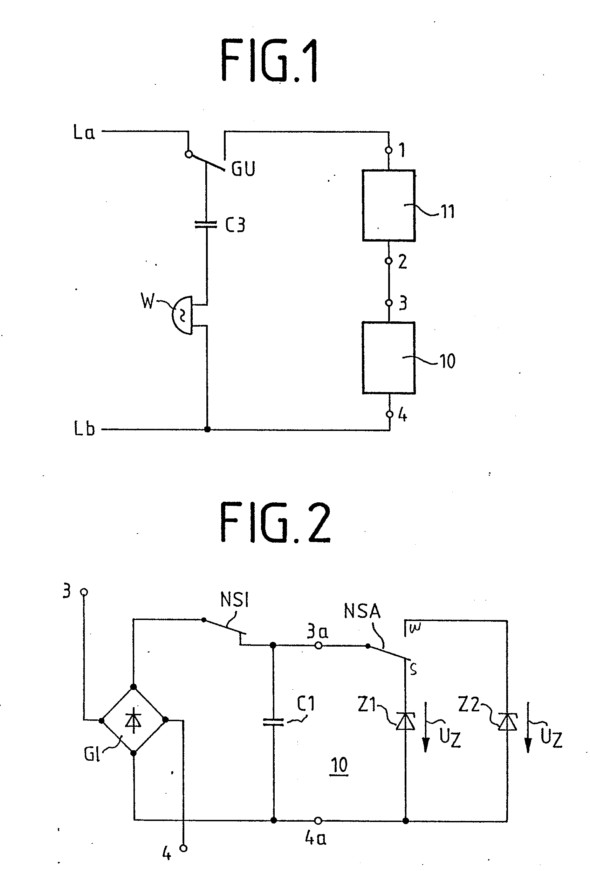

Die Fig. 1 zeigt eine Fernsprechapparateschaltung, bei der die Sprechschaltung 11 und das Wählorgan 10 in Serie geschaltet sind.

Diese Serienschaltung ist an den Amtsleitungsadern La und Lb angeschlossen. Zwischen den Anschlußpunkten 1 und 2 liegt die Sprechschaltung 11 und zwischen den Anschlußpunkten 3 und 4 liegt das Wählorgan 10 an. An der Amtsleitung La und Lb sind in bekannter Weise der Wecker W und ein Kondensator C 3 über den Gabelumschaltkontakt GU angeschlossen. Die Sprechschaltung 11 besteht im wesentlichen aus einem Mikrofon und einer Hörkapsel, die jeweils mit einem Übertrager verbunden sind (nicht dargestellt). Die Sprechschaltung 11 ist gleichstrommäßig niederohmig ausgebildet. Das Wählorgan 10 ist wechselstrommäßig niederohmig ausgebildet, d.h. wechselstrommäßig besteht zwischen den Anschlußpunkten 3 und 4 ein Kurzschluß. Bei dieser Anordnung liegt am Wählorgan 10 der größte Teil der Apparategleichspannung an.

Dies verdeutlicht das in Fig. 5 dargestellte Spannungs-/Zeit-Diagramm. Darin sind die Potentiale P1 bis P4 an den Anschlußpunkten 1 und 2 der Sprechschaltung 11 und an den Anschlußpunkten 3 und 4 des Wählorgans 10 über der Zeit aufgetragen, wobei eine sinusförmige Sprechwechselspannung angenommen wurde. Als Bezugspunkt mit dem negativsten Potential wurde der Anschlußpunkt 1 gemäß Fig. 1 gewählt, der dem Potential P1 in Fig. 2 entspricht. Zwischen den Potentialen P4 und P2/3 steht eine Gleichspannung, die wesentlich größer ist als der Gleichspannungsanteil der Spannungsdifferenz zwischen den Potentialen P2/3 und P1. Das bedeutet, daß die Sprechschaltung 11 (zwischen den Anschlußpunkten 1 und 2) gegenüber dem zwischen den Anschlußpunkten 3 und 4 angeschlossenen Wählorgan 10 gleichstrommäßig niederohmig ist.

Wechselspannungsmäßig besteht zwischen den Anschlußpunkten 4 und 3 bzw. 2 keine Potentialdifferenz, es besteht also eine wechselstrommäßige Niederohmigkeit bzw. ein Kurzschluß.

Die Wechselspannung an der Sprechschaltung 11 zwischen den Anschlußpunkten 1 und 2 kann dagegen so groß sein, daß sie bei einer angenommenen Gleichspannung, der sie überlagert ist, zu einer entgegengesetzten Polarität der Spannung an der Sprechschaltung führt.

Das Wählorgan 10 ist in Fig. 2 dargestellt. Wie bereits erwähnt, ist das Wählorgan zwischen den Anschlußpunkten 3 und 4 angeschaltet. Das Wählorgan 10 besteht aus einem Doppelweggleichrichter GI, einem Kondensator C1, zwei Z-Dioden Z1 und Z2 und aus einem nsi-Kontakt und einem nsa-Kontakt. Der nsi-Kontakt (Nummernschalter-Impulskontakt) unterbricht die Amtsschleife während der Wahl entsprechend der gewählten Ziffer. Der nsa-Kontakt (Nummernschalter-Arbeitskontakt) wird beim Beginn und Ende des Wählvorganges geschaltet zum Umschalten vom Sprech- auf den Wählbetrieb und umgekehrt. Der parallel zum Gleichrichter GI geschaltete Kondensator C1 bewirkt zusätzlich zu den Z-Dioden die wechselstrommäßige Niederohmigkeit des Wählorgans 10. Im Sprechbetrieb liegt zwischen den Anschlußpunkten 3a und 4a die Z-Diode Z1 und im Wählbetrieb liegt zwischen den Anschlußpunkten 3a und 4a die Z-Diode Z2 an. Die Z-Dioden Z1 und Z2 begrenzen die Spannung derart, daß der Fern sprechapparat die geforderten Widerstandswerte erfüllt, wobei unterschiedliche Widerstandswerte bzw. Spannungswerte im Sprech- und Wählbetrieb erreicht werden.

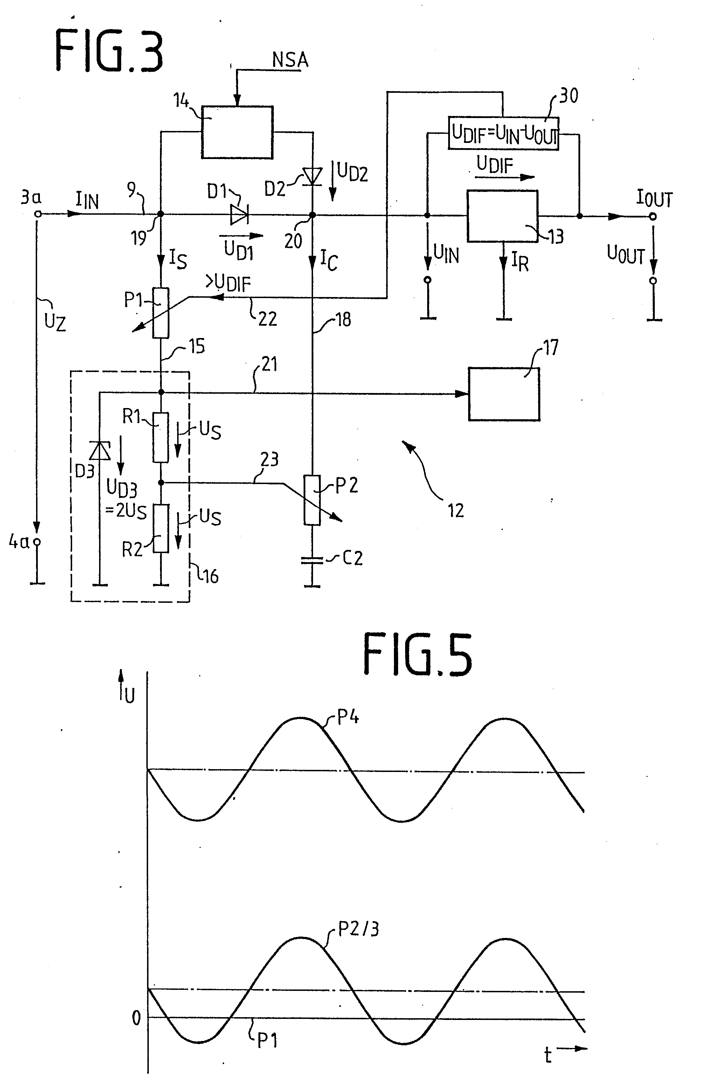

Zur Realisierung der in Fig. 2 dargestellten Z-Dioden Z1 und Z2 ist eine in Fig. 3 dargestellte Steuerschaltung 12 vorgesehen, die an den Anschlußpunkten 3a und 4a angeschlossen ist. An diesen Anschlußpunkten liegt die Z-Diodenspannung $U_Z$ an.

Die Steuerschaltung 12 besteht aus einem Spannungsregler 13 mit dem Längsspannungsregler 30, einem Spannungsvervielfacher 14, einer Auswerteschaltung 16, einer Schleifenerkennung 17, zwei Dioden D1 und D2, zwei regelbaren Widerständen P1 und P2 und einem Kondensator C2.

Am Anschlußpunkt 3a ist auf der Eingangsleitung 9 der Spannungsregler 13 in Reihe mit einer Diode D1 angeschlossen. Am Ausgang des Spannungsreglers 13 wird die für alle Leistungsmerkmale benötigte Spannung ($U_{OUT}$) abgegriffen. Parallel zur Diode D1 liegt an den Anschlußpunkten 19 und 20 ein Spannungsvervielfacher 14, der über den nsa-Kontakt aktiviert wird. Am Anschlußpunkt 19 ist ein Shuntweg 15 vorgesehen, der den regelbaren Widerstand P1 und die Auswerteschaltung 16 zur Auswertung des Stromüberlaufs umfaßt. An der Auswerteschaltung 16 ist eine Schleifenerkennung 17 über die Leitung 21 angeschlossen. Am Anschlußpunkt 20 ist ein weiterer Strompfad 18 vorgesehen, der einen regelbaren Widerstand P2 und einen Stützkondensator C2 aufweist.

Der regelbare Widerstand P1 wird durch die am Spannungsregler 13 anliegende Differenzspannung über die Leitung 22 geregelt. Der zweite regelbare Widerstand P2 wird durch die Auswerteschaltung 16 über die Leitung 23 geregelt, die aus zwei in Reihe geschalteten Widerständen R1 und R2 und aus einer zu den Widerständen R1 und R2 parallel liegenden Z-Diode D3 besteht.

Mit der Steuerschaltung 12 wird eine Z-Diodenspannung $U_Z$ realisiert, die unabhängig vom Schleifeneingangsstrom $I_{IN}$ ist und die zu jedem Zeitpunkt von der Reglerausgangsspannung $U_{OUT}$ (im allgemeinen 5 V) abgeleitet wird.

Im Sprechbetrieb ergibt sich die Z-Diodenspannung $U_Z$ an der Z-Diode Z1 als Summe des Spannungsabfalls $U_{D1}$ an der Diode D1, der Reglerlängsspannung $U_{DIF}$ und der Reglerausgangsspannung $U_{OUT}$. Folgende Gleichung gilt:

$$U_Z = U_{D1} + U_{DIF} + U_{OUT}$$

Die Differenzspannung $U_{DIF}$ wird größer gewählt als die vom Spannungsregler in jedem Falle benötigte Längsspannung.

Um einen konstante Differenzspannung $U_{DIF}$ zu erhalten, muß der Eingangsschleifenstrom $I_{IN}$ größer als der Ausgangsschleifenstrom $I_{OUT}$ sein, weiterhin muß die Stromdifferenz $I_{IN} - I_{OUT}$ vor dem Spannungsregler 13 über den Shuntweg 15 und den Strompfad 18 abgeleitet werden, d.h. die Stromgleichung lautet:

$$I_{IN} - I_{OUT} = I_S + I_C + I_R$$

Hierbei ist der Querstrom $I_R$ des Spannungsreglers 13 vernachlässigbar. Der über den Shuntweg 15 fließende Shuntstrom $I_S$ und der über den Strompfad 18 fließende Kondensator-Ladestrom $I_C$ werden in Abhängigkeit der Differenzspannung $U_{DIF}$ mit Hilfe der regelbaren Widerstände P1 und P2 über die Leitungen 22 und 23 gesteuert.

In Reihenanordnung mit dem regelbaren Widerstand P1 ist auf dem Shuntweg 15 die Auswerteschaltung 16 vorgesehen, die aus zwei in Reihe geschalteten Widerständen R1 und R2 und einer parallel geschalteten

3

Z-Diode D3 besteht. Die Z-Spannung der Diode D3 muß kleiner sein als die zu regelnde Z-Diodenspannung $U_Z$ und andererseits so groß sein, daß an jedem der zwei Widerstände R1 und R2 eine Schwellspannung $U_S$ abfällt, mit deren Hilfe eine Schleifenerkennung 17 und der regelbare Widerstand P2 angesteuert werden, d.h. die Z-Diodenspannung $U_Z$ muß größer sein als die Z-Spannung an der Diode D3 und größer als die doppelte Schwellspannung $2U_S$ an den Widerständen R1 und R2. Die Widerstände R1 und R2 sind so dimensioniert, daß an ihnen eine Schwellspannung $U_S$ abfällt, wenn über sie ein Strom fließt, der mehrere Zehnerpotenzen niedriger liegt als der Eingangsstrom $I_{IN}$. Wenn eine Stromdifferenz aus dem Eingangsstrom $I_{IN}$ und dem Ausgangsstrom $I_{OUT}$ von der Größe entsteht, daß an der Schleifenerkennung 17 bzw. am Widerstand R1 eine Spannung anliegt, die größer ist als die Schwellspannung $U_S$, so erkennt die Schleifenerkennung 17 über die Leitung 21 eine geschlossene Amtsschleife. Bei einer positiven Stromdifferenz zwischen dem Eingangsstrom und dem Reglerausgangsstrom $I_{IN} - I_{OUT}$ wird zunächst der regelbare Widerstand P2 über die Leitung 23 so geregelt, daß ein Differenzstrom als Ladestrom $I_C$ über den Strompfad 18 in den Kondensator C2 fließt. Ist der Kondensator C2 auf die Spannung $U_{IN}$ aufgeladen, fließt verbleibender Differenzstrom über die Z-Diode D3 ab.

Im Wählbetrieb ist die Z-Diodenspannung $U_Z$ an der Z-Diode Z2 gleich oder kleiner als die Ausgangsspannung $U_{OUT}$. Es wird der Spannungsvervielfacher 14 über den nsa- Kontakt aktiviert. Folgende Gleichung gilt:

$$U_Z = \frac{(U_{D2} + U_{DIF} + U_{OUT})}{K}$$

$$(K = Faktor\ des\ Spannungsvervielfachers)$$

Weiterhin gilt, daß die Z-Diodenspannung zweimal größer sein muß als die Schwellspannung $U_S$ an den Widerständen R1 und R2. Auch im Wählbetrieb wird, wie bereits oben für den Sprechbetrieb beschrieben, die Stromdifferenz $I_{IN} - I_{OUT}$ vor dem Spannungsregler 13 über den Shuntweg 15 und den Strompfad 18 abgeleitet, wobei für die Stromdifferenz gilt

$$\frac{I_{IN}}{K} - I_{OUT} > 0 \, ,$$

d.h. der Eingangsstrom $I_{IN}$ muß um den Faktor K größer sein als der benötigte Ausgangsstrom $I_{OUT}$.

Auch während der Schleifenstromunterbrechungen liegt genügend Eingangsspannung $U_{IN}$ an, da in dieser Phase der Stützkondensator C2 seinen Strom über die Leitung 18 an den Spannungsregler 13 abgibt.

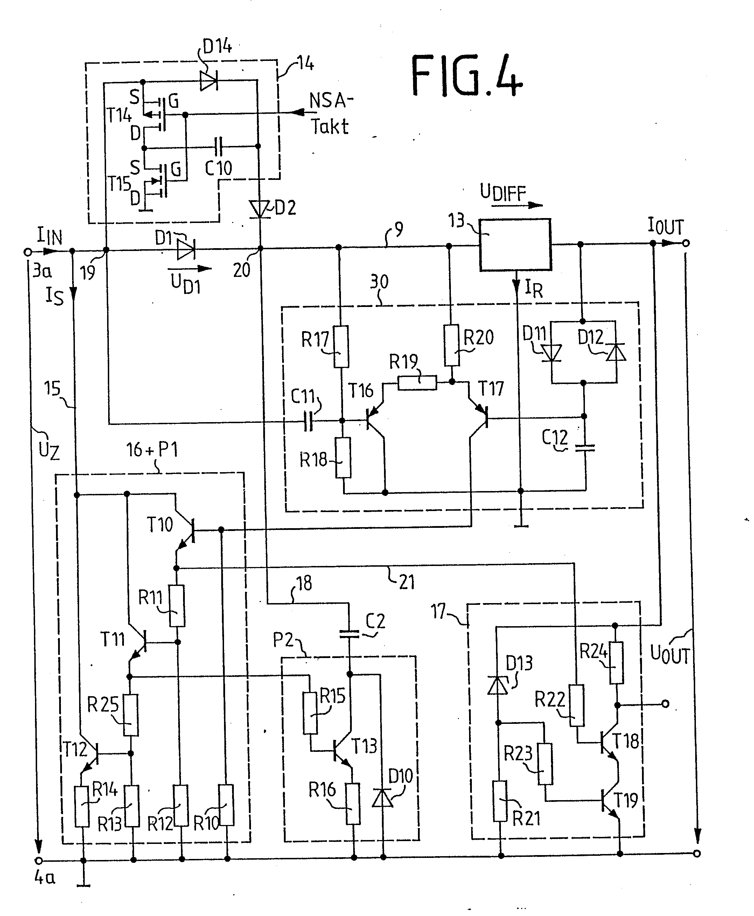

Zur Realisierung der in Fig. 3 dargestellten Schaltungsteile des Spannungsvervielfachers 14, der Auswerteschaltung 16, der Schleifenerkennung 17, des Längsspannungsreglers 30 und der regelbaren Widerstände P1 und P2 durch elektronische Bauteile ist in Fig. 4 ein Ausführungsbeispiel eines Schaltbildes dargestellt.

Der Längsspannungregler 30 besteht aus einem Differenzverstärker mit den Transistoren T16 und T17, aus den Widerständen R17, R18, R19 und R20, aus den Kondensatoren C11 und C12 und aus den Dioden D11 und D12. Hierbei sind die beiden Emitter der Transistoren T16 und T17 über den Widerstand R19 miteinander verbunden. Der Widerstand R20 ist an der Eingangsleitung 9 und am Emitter des Transistors T17 angeschlossen. Der Widerstand R17 liegt an der Eingangsleitung 9 und an der Basis des Transistors T16 an. Der Widerstand R18 ist an der Basis und am Kollektor des Transistors T16 angeschlossen. Der Kondensator C11 ist an der Basis des Transistors T16 und am Anschlußpunkt 19 angeschlossen. Der Kondensator C12 liegt an der Basis des Transistors T17 und am Kollektor des Transistors T16 an. Die Dioden D11 und D12 sind gegenpolig parallel geschaltet und liegen am Ausgang des Spannungsreglers 13 und an der Basis des Transistors T17 an.

Der Spannungsvervielfacher 14 besteht aus den MOS-Schalttransistoren T14, T15, aus dem Kondensator C10 und aus den Dioden D2 und D14. Die Dioden D14 und D2 sind in Reihe geschaltet und liegen an den Anschlußpunkten 19 und 20 an. Die MOS-Schalttransistoren T14 und T15 sind über den Gate-Anschluß miteinander verbunden. Der Kondensator C10 liegt einerseits zwischen den Dioden D14 und D2 und andererseits an den Drain-Anschlüssen der MOS-Schalttransistoren T14, T15 an.

Die Auswerteschaltung 16 und der regelbare Widerstand P1 bestehen aus den Transistoren T10, T11 und T12 und aus den Widerständen R10, R11, R12, R13, R14, und R25. Hierbei liegt die Kollektor-Emitter-Strecke des Transistors T12 in Reihe mit dem Widerstand R14, die Kollektor-Emitter-Strecke des Transistors T11 liegt in Reihe mit den Widerständen R25 und R13 und die Kollektor-Emitter-Strecke des Transistors T10 liegt in Reihe mit den Widerständen R11 und R12, wobei die Basis des Transistors T12 zwischen den Widerständen R25 und R13 und die Basis des Transistors T11 zwischen den Widerständen R11 und R12 angeschlossen ist. Die Kollektoren der Transistoren T10, T11, T12 sind miteinander verbunden und liegen an der Eingangsleitung 9 an. An der Basis des Transistors T10 liegt der Widerstand R10 an, die ferner mit dem Kollektor des Transistors T17 des Längsspannungsreglers 30 verbunden ist.

Der regelbare Widerstand P2 besteht aus den Widerständen R15 und R16, aus dem Transistor T13 und aus der Diode D10, wobei der Widerstand R15 an der Basis, der Widerstand R 16 am Emitter und die Diode D10 am Kollektor des Transistors T13 angeschlossen sind. Am Kollektor des Transistors 13 liegt ferner der Stützkondensator C2 an, der am Anschlußpunkt 20 angeschlossen ist.

Die Schleifenerkennung 17 besteht aus den Widerständen R21, R22, R23 und R24, aus den Transistoren T18 und T19 und aus der Diode D13. Hierbei liegt der Widerstand R24 mit der Kollektor-Emitter-Strecke des Transistors T18 und der Kollektor-Emitter-Strecke des Transistors T19 in Reihe. Parallel hierzu sind in Reihe der Widerstand R21 und die Diode D13 geschaltet. Der Widerstand R22 ist an der Basis des Transistors T18 und am Emitter des Transistors T10 angeschlossen. Der Widerstand R23 liegt an der Basis des Transistors T19 an.

Im Längsspannungsregler 30 wird das Verhältnis des Widerstandes R17 zu dem Widerstand R18 durch das Verhältnis der Reglerlängsspannung $U_{DIFF}$ zur Reglerausgangsspannung $U_{OUT}$ bestimmt. Dabei wird die Ausgangsspannung $U_{OUT}$ durch die Schaltungsanordnung des Kondensators C12 und der beiden Dioden D11 und D12 am Eingang des Differenzverstärkers geglättet. Steigt die Spannung $U_{DIFF}$, so verringert sich die Spannung am Widerstand R19 im gleichen Maße. Dementsprechend verringert sich der Strom über den Transistor T16. Der Strom über den Widerstand R20 bleibt hierbei nahezu konstant, da sich der Strom über den Transistor T17 erhöht. Hieraus resultiert ein Ansteigen der Spannung am Widerstand R10 in der Auswerteschaltung 16. Die Spannung $U_{DIFF}$ steigt nur dann an, wenn weniger Strom ($I_{OUT}$) verbraucht wird, als die Amtsschleife mit $I_{IN}$ der Schaltung zur Verfügung stellt. Die Spannung $U_{DIFF}$ verändert sich stets nur um einen kleinsten Bruchteil ihrer durch die Widerstände R17/R18 bestimmten Größe. Bei steigender Spannung am Widerstand R10 wird zunächst der Transistor T10 leitend. Hierdurch entsteht an der Reihenschaltung der Widerstände R11 und R12 eine Schwellspannung $U_S$, die mit der Spannung an der Reihenschaltung der Widerstände R1/R2 in Fig. 3 zu vergleichen ist. Diese Schwellspannung $U_S$ bewirkt ein Leitendwerden des Transistors T18 über den Widerstand R22, der Schleifenerkennung 17, aber nur dann, wenn der Transistor T19 leitend ist. Durch die Schaltungsanordnung der Z-Diode D13 und der Widerstände R21 und R23 wird gewährleistet, daß der Transistor T19 erst dann leitend ist, wenn sich die Spannung $U_{OUT}$ aufgebaut hat. Wenn der Transistor T18 leitend ist, entsteht am Widerstand R24 eine Spannung $U_{OUT}$, die erkennen läßt, daß die Stromschleife über die gesamte Schaltungsanordnung geschlossen ist. Wird bei weiterem Spannungsanstieg an dem Widerstand R10 der Transistor T11 leitend, so entsteht an der Reihenschaltung der Widerstände R25 und R13 eine Schwellspannung $U_S$, die über den Widerstand R15 den Transistor T13 leitend macht. Die Schaltungsanordnung des Transistors T13 und des Widerstandes R16 entspricht dem in Fig. 3 dargestellten regelbaren Widerstand P2. Durch die Diode D10 kann der Kondensator C2 gespeicherte Ladung abgeben, wenn der Transistor T13 nicht leitend ist. Steigert sich die Spannung am Widerstand R10 weiter, so wird der Tansistor T12 leitend, der zusammen mit dem niederohmigen Widerstand R14 die Funktion der Z-Diode D3 in Fig. 3 erfüllt. Die Transistoren T10, T11 und T12 erfüllen gemeinsam die Funktion des regelbaren Widerstandes P1 in Fig. 3, indem der Strom $I_S$ proportional zur Spannung am Widerstand R10 gesteuert wird. Hierdurch ist die Eingangsspannung $U_Z$ die konstante Summe der Spannungen $U_{D1}$, $U_{DIFF}$ und $U_{OUT}$. Der Kondensator C11 unterstützt die Konstanz von $U_Z$ bei extremen Veränderungen von $I_S$. Damit ist die Funktion der in Fig. 2 dargestellten Z-Diode Z1 erfüllt.

Um die Funktion der Z-Diode Z2 in Fig. 2 zu erfüllen bedarf es des Spannungsvervielfachers 14. Dieser ist in Fig. 4 als Spannungsverdopplungsstufe ausgeführt. Durch das Anlegen eines nsa-Taktes wird über die Schaltungsanordnung der Transistoren T14, T15, der Diode D14 und des Kondensators C10 die Eingangsspannung $U_Z$ nahezu verdoppelt und über die Diode D2 dem Eingang des Spannungsreglers 13 zugeführt. Dies bedeutet im konkreten Schaltungsaufbau eine annähernde Halbierung der Eingangsspannung $U_Z$ an den Anschlußpunkten 3a, 4a.

## Patentansprüche

1. Schaltungsanordnung mit einer Sprechschaltung und einem Wählorgan für einen schleifengespeisten Fernsprechapparat,
**dadurch gekennzeichnet,**
daß die Sprechschaltung (11) und das Wählorgan (10) der Schaltungsanordnung in Serie geschaltet sind und daß die Sprechschaltung (11) gleichstrommäßig niederohmig und das Wählorgan (10) wechselstrommäßig niederohmig ausgebildet sind.

2. Schaltungsanordnung nach Anspruch 1, mit einem Wählorgan bestehend aus einem Gleichrichter und einem parallel dazu geschalteten Kondensator mit einem nsi-Kontakt und einem nsa-Kontakt, dadurch gekennzeichnet, daß der nsa-Kontakt den Schleifenstrom beim Sprechbetrieb über eine erste Z-Diode (Z 1) und beim Wählbetrieb über eine zweite Z-Diode (Z 2) führt, die die jeweiligen Widerstandswerte für den Sprech- und Wählbetrieb darstellen.

3. Schaltungsanordnung nach Anspruch 2,

**dadurch gekennzeichnet,**

daß die Z-Dioden (Z 1, Z 2) aus einer Steuerschaltung (12) gebildet werden, die auf der Eingangsleitung (9) einen Spannungsregler (13) mit einer in Reihe liegenden Diode (D 1) und eine parallel zur Diode (D 1) geschaltete Reihenschaltung aus einem über den nsa-Kontakt einschaltbaren Spannungsvervielfacher (14) und einer Diode (D 2) aufweist, wobei am positiven Pol der Diode (D 1) ein Shuntstromweg (15) mit einem regelbaren Widerstand (P 1) und einer Auswerteschaltung (16), an der eine Schleifenerkennung (17) angeschlossen ist, und am negativen Pol der Diode (D 1) ein Strompfad (18) mit einem regelbaren Widerstand (P 2) und einem Stützkondensator (C 2) anliegt, wobei der regelbare Widerstand (P 1) über die Differenzspannung des Spannungsreglers (13) und der regelbare Widerstand (P 2) über die Auswerteschaltung (16) gesteuert werden.

4. Schaltungsanordnung nach Anspruch 3, dadurch gekennzeichnet, daß die Auswerteschaltung (16) zur Stromüberlauf-Auswertung aus einer Reihenschaltung zweier Widerstände (R 1, R 2) und aus einer parallel zu den Widerständen (R 1, R 2) liegenden Z-Diode (D 3) aufgebaut ist.

5. Schaltungsanordnung nach den Ansprüchen 3 und 4, dadurch gekennzeichnet, daß ein Längsspannungsregler (30) einen aus Transistoren (T16) und (T17) gebildeten Differenzverstärker aufweist, deren Emitter über einen Widerstand (R19) miteinander verbunden sind, wobei ein Widerstand (R20) am Emitter des Transistors (T17) und an der Eingangsleitung (9) und ein Widerstand (R17) an der Basis des Transistors (T16) und an der Eingangsleitung (9) anliegen und ein Widerstand (R18) an der Basis und am Kollektor des Transistors (T16) angeschlossen ist.

6. Schaltungsanordnung nach den Ansprüchen 3, 4 und 5, dadurch gekennzeichnet, daß am Kollektor des Transistors (T17) ein Widerstand (R10) der Auswerteschaltung (16) angeschlossen ist, der mit der Basis eines Transistors (T10) verbunden ist, der am Emitter eine Reihenschaltung der Widerstände (R11 und R12) aufweist, an denen eine Schwellspannung $U_S$ bei steigender Spannung am Widerstand (R10) entsteht.

7. Schaltungsanordnung nach den Ansprüchen 3 bis 6, dadurch gekennzeichnet, daß die Schleifenerkennung (17) einen Transistor (T18) aufweist, an dessen Basis ein Widerstand (R22) anliegt, der mit dem Emitter des Transistors (T10) verbunden ist, wobei bei vorhandener Schwellspannung $U_S$ an den Widerständen (R11 und R12) der Transistor (T18) leitend wird und an einem am Kollektor angeschlossenen Widerstand (R24) eine Spannung entstehen läßt, die eine geschlossene Stromschleife signalisiert.

8. Schaltungsanordnung nach den Ansprüchen 3 bis 7, dadurch gekennzeichnet, daß in der Auswerteschaltung (16) und im regelbaren Widerstand (P1) zwischen den Widerständen (R11 und R12) die Basis des Transistors (T11) anliegt, an dessen Emitter eine Reihenschaltung der Widerstände (R25 und R13) und parallel hierzu ein Widerstand (R15), die Basis-Emitterstrecke eines Transistors (T13) und ein Widerstand (R16) des regelbaren Widerstandes (P2) angeschlossen sind, wobei am Kollektor des Transistors (T13) der Stützkondensator (C2) anliegt, der Energie speichert, wenn an der Reihenschaltung der Widerstände (R25 und R13) eine Schwellspannung $U_S$ vorhanden ist.

9. Schaltungsanordnung nach den Ansprüchen 3 bis 8 dadurch gekennzeichnet, daß zwischen den Widerständen (R25 und R13) die Basis eines Transistors (T12) angeschlossen ist, an dessen Emitter der Widerstand (R14) anliegt.

0259247

# FIG.1

# FIG.2

# FIG.3

# FIG.5

0259247

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 282 198 (TELECOMMUNICATIONS RADIOELECTRIQUES ET TELEPHONIQUES) * Seite 2, Zeilen 8-11; Seite 3, Zeilen 15-36; Seite 4, Zeile 37 - Seite 5, Zeile 1; Seite 6, Zeile 38 - Seite 7, Zeile 1; Seite 8, Zeilen 1-4,29,30 * | 1 | H 04 M 19/08 |
| A | | 2,3 | |
| A | EP-A-0 080 396 (THOMSON-CSF TELEPHONE) * Seite 1, Zeilen 15-29; Seite 5, Zeile 31 - Seite 6, Zeile 28; Seite 10, Zeilen 5-20 * | 1-3 | |
| | | | RECHERCHIERTE SACHGEBIETE (Int. Cl.4) |
| | | | H 04 M |

Der vorliegende Recherchenbericht wurde für alle Patentansprüche erstellt

| Recherchenort | Abschlußdatum der Recherche | Prüfer |
|---|---|---|
| DEN HAAG | 02-12-1987 | VERSLYPE J.P. |